# EUROPÄISCHE PATENTSCHRIFT

(11) **EP 2 348 826 B1**
(45) Veröffentlichungstag und Bekanntmachung des Hinweises auf die Patenterteilung: **25.07.2012**
(21) Anmeldenummer: 09778230.4
(22) Anmeldetag: 31.08.2009
(51) Int. Cl.: A01K 63/04, A01K 63/00

(54) **TEICHFILTER**
POND FILTER
FILTRE POUR BASSIN

(30) Priorität: 29.08.2008 DE 102008044950
(43) Veröffentlichungstag der Anmeldung: 03.08.2011
(60) Teilanmeldung: 11009711.0
(73) Patentinhaber: Oase GmbH, 48477 Hörstel-Riesenbeck (DE)
(72) Erfinder: WAGNER, Utz, 48155 Münster (DE); SCHRÖTER, Frank, 49479 Ibbenbüren (DE); HAST, Matthias, 48147 Münster (DE); MÖLLERS, Paul, 48346 Ostbevern (DE)
(74) Vertreter: Busse & Busse
(86) Internationale Anmeldenummer: PCT/EP2009/006303
(87) Internationale Veröffentlichungsnummer: WO 2010/022986

(56) Entgegenhaltungen:
- EP-A- 0 826 637
- WO-A-2007/092988
- DE-A1- 4 119 154
- DE-A1- 10 002 397
- DE-U1- 20 221 049
- US-B1- 6 365 044

## Beschreibung

Die Erfindung betrifft einen Teichfilter mit einem Gehäuse, das eine Wasserzuführöffnung, eine Wasserabfuhröffnung und eine Schlammabfuhröffnung aufweist. In dem Gehäuse befindet sich ein Filtermedium, und unter diesem ist ein Sammelraum für Schmutzpartikel.

Ein derartiger Filter ist beispielsweise aus der DE 100 02 397 C2 bekannt. Die Schlammabfuhröffnung bei diesem Filter ist mit einem Hahnventil versehen, das von Hand geöffnet werden kann. Die Anordnung der Schlammabfuhröffnung muss dann an der tiefsten Stelle des Filters sein, damit der aus den Schmutzpartikeln gebildete Schlamm ablaufen kann. Eine kontinuierliche Überwachung des Filterzustandes und eine regelmäßige manuelle Reinigung ist daher erforderlich.

Die DE 102 52 558 B4 und DE 202 21 049 U1 zeigen einen ähnlich aufgebauten Filter für Fischhälterungsbecken, bei dem ebenfalls sich ansammelnde Schmutzpartikel über die Öffnung eines Ventils an einem Bodenauslass entfernt werden können. Man kann den Filter auch vollständig leer laufen lassen und anschließend über eine dort vorgesehene Druckdüse die Wandbereiche der dortigen Sammelkammer ausspülen, um den Filter gründlich zu reinigen. Nach wie vor ist jedoch eine regelmäßige Überwachung und Vielzahl manueller Eingriffe nötig, um einen Schlammstau zu vermeiden.

Der Erfindung liegt daher die Aufgabe zugrunde, einen gattungsgemäßen Teichfilter zu schaffen, der im Handhabungskomfort verbessert ist. Diese Aufgabe wird erfindungsgemäß durch einen Teichfilter mit den Merkmalen des Anspruchs 1 gelöst.

Durch die Verwendung einer Schlammpumpe zur Abfuhr der Schmutzpartikel können diese aktiv aus dem Sammelraum abgepumpt werden, ohne dass man auf eine langsame und unvollständige Entleerung über die natürliche Schwerkraft wie beim Stand der Technik angewiesen ist. Die Schlammabfuhr wird dadurch wesentlich gründlicher und vereinfacht. Zusätzlich bewirkt die erfindungsgemäß vorgesehene Steuerung der Schlammpumpe, dass die Pumpe schaltbar ist und die Schlammabfuhr diskontinuierlich in sinnvollen Abständen erfolgen kann. Zur Automatisierung kann die Steuerung in Abhängigkeit vorgebbarer Parameter, wie beispielsweise der Wassertemperatur oder einer gemessenen Schlammhöhe, den Abpumpvorgang einleiten. Zwar sind auch rein mechanische Lösungen, z.B. mit einem Schlammhöhenschwimmer, denkbar, jedoch wird einer für diesen Fall präziseren elektronischen Steuerung der Vorzug gegeben.

Bevorzugt ist der Teichfilter als kompakte Einheit auszubilden, bei dem die Schlammpumpe innerhalb des Gehäuses angeordnet ist. Die Schlammabfuhröffnung kann sich bei dem erfindungsgemäßen Teichfilter durch die Verwendung der Schlammpumpe auch oberhalb des Sammelraums für die Schmutzpartikel befinden, wodurch für die Filtergeometrie mehr Ausgestattungsmöglichkeiten zur Verfügung stehen und die Bauhöhe des Filters verringert werden kann.

Weitere Vorteile und Einzelheiten der Erfindung ergeben sich aus den übrigen Ansprüchen und einem Ausführungsbeispiel der Erfindung, das im Folgenden beschrieben wird; es zeigen:
- Fig.: eine perspektivische Außenansicht des erfindungsgemäßen Filters,
- Fig. 2: den Gegenstand aus Fig. 1 ohne Filterdeckel und vordere Gehäusewandung,
- Fig. 3: einen Schnitt in Richtung III - III durch den Gegenstand aus Fig. 1,
- Fig. 4: eine perspektivische Schnittansicht in Richtung IV - IV durch den Gegenstand aus Fig. 1,
- Fig. 5: eine Draufsicht auf den Filter aus Fig. 1 ohne Filterdeckel,
- Fig. 6: eine schematische und vergrößerte Darstellung des Bediendisplays aus Fig. 1,
- Fig. 7: eine perspektivische Einzelteildarstellung des in Fig. 2 und Fig. 4 im Filter erkennbaren Wasserverteilers,
- Fig. 8: einen Schnitt in Richtung VIII - VIII durch den Gegenstand aus Fig. 7 und
- Fig. 9.: einen Schnitt in Richtung IX - IX durch den Gegenstand aus Fig. 7.

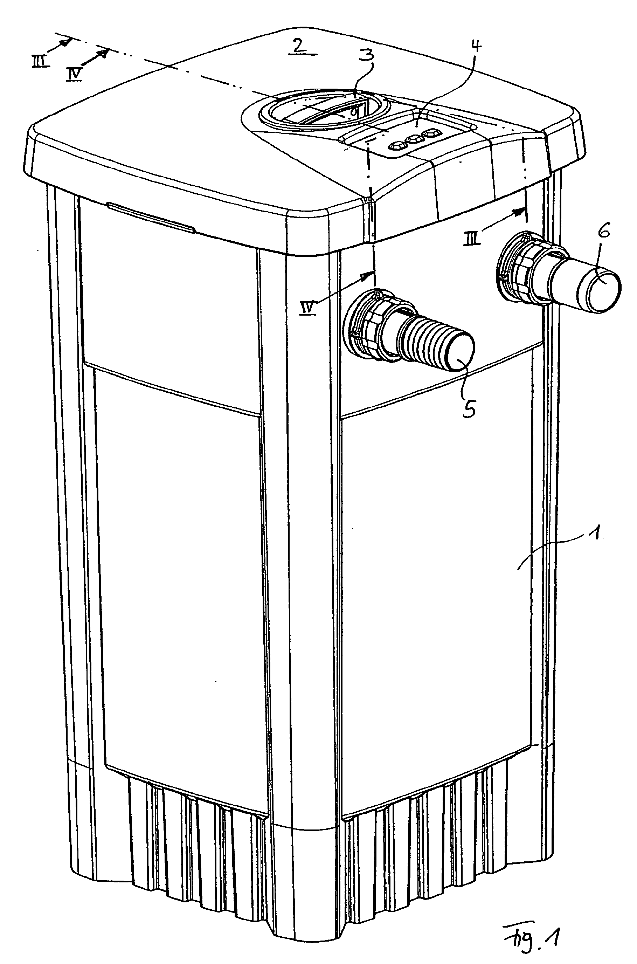

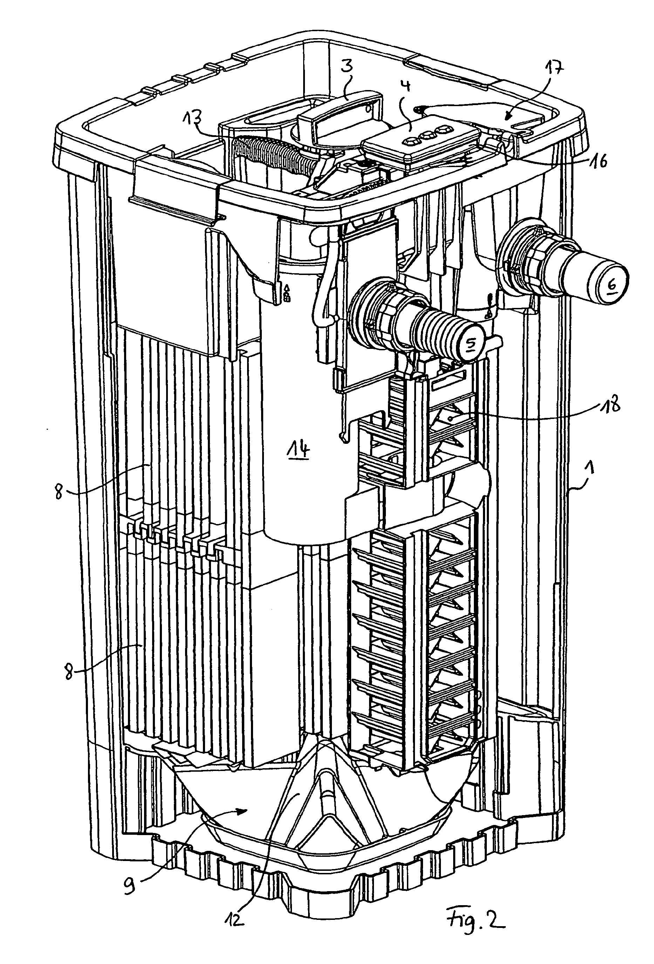

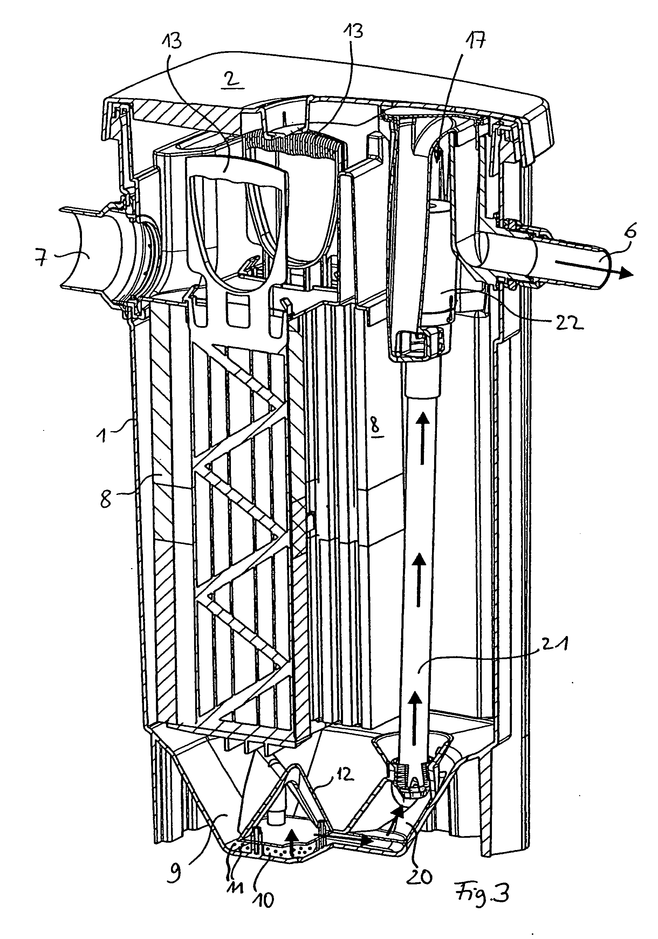

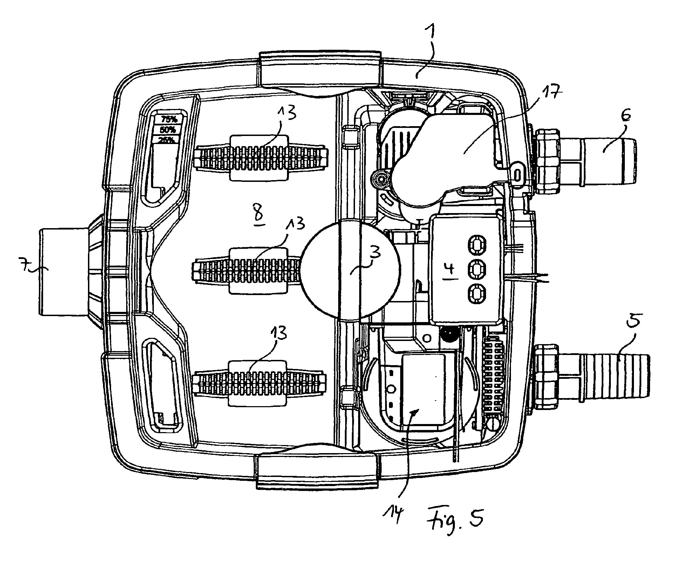

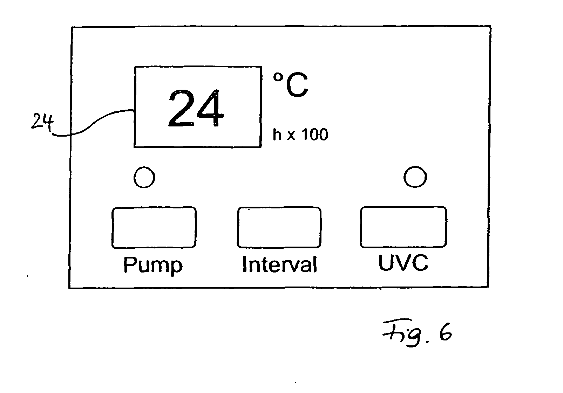

Der in Fig. 1 dargestellte Teichfilter besitzt ein Gehäuse 1, das obenseitig einen Deckel 2 aufweist. Der Deckel 2 ist über eine Verriegelung 3 am unteren Gehäuseteil gehalten. Durch Verdrehung der Verriegelung 3 kann der Deckel 2 gelöst oder gesichert werden. Außerdem weist der Deckel 2 eine Ausnehmung für ein Bedien- und Anzeigefeld 4 einer Steuerung auf, die im Zusammenhang mit Fig. 6 später näher erläutert werden. Auf der in Fig. 1 und 2 rechten Gehäuseseite befindet sich eine Wasserzufuhröffnung 5 und eine Schlammabfuhröffnung 6. Auf der in Fig. 1 und 2 nicht sichtbaren Gehäuserückseite ist gegenüberliegend eine in den Fig. 3 bis 5 sichtbare Wasserabfuhröffnung 7 vorhanden.

Das Innere des Teichfilters und seine Funktion wird insbesondere anhand der Fig. 2 bis 4 nachfolgend erläutert. Im Filtergehäuse 1 befindet sich ein Filtermedium 8, das bei der dargestellten Ausführungsform durch in drei senkrechten Blöcken angeordnete Filterschäume 8 gebildet wird. Die Filterschäume 8 werden von dem zu reinigenden Wasser durchströmt, wobei einerseits Schmutzpartikel in und an den Filterschäumen 8 zurückgehalten werden und andererseits sich in den Filterschäumen 8 eine Besiedelung von Mikroorganismen ausbildet, so dass auch eine biologische Klärung stattfindet. Die von den Filterschäumen 8 zurückgehaltenen Schmutzpartikel sinken entlang der Filterschäume 8 ab in einen unter dem Filtermedium 8 angeordneten Sammelraum 9, der bei der dargestellten Ausführungsform mit einem Schlammsumpf 10 ausgestattet ist. In dem Sammelraum 9 befindet sich ein Absetzkegel 12, der dafür sorgt, dass der sich absetzende Schlamm sich gleichmaßig im Schlammsumpf 10 ablagert. In den Filterschäumen 8 festgesetzte Schmutzpartikel können gelöst werden, indem die Filterschäume 8 über mit Ziehgriffen 13 versehene Filterschaumhalterungen ausgequetscht werden. Die gelösten Schmutzpartikel sinken dabei nieder und lagern sich ebenfalls im Schlammsumpf 10 ab. In Fig. 3 sind einzelne Schmutzpartikel 11 dargestellt.

Vorzugsweise verfügt die Pumpe auch über eine integriertes Entkeimungslampe 14, hier ein im Gehäuse aufgenommenes UVC-Gerät 14. Diese kann bevorzugt ebenfalls an die Steuerung 16 angeschlossen sein, die die Schlammpumpe 17 zur Abfuhr der Schmutzpartikel 11 aus dem Sammelraum 9 steuert. Hierbei lassen sich Synergien nutzen, da auch das UVC-Gerät 14 nicht zwingend dauernd in Betrieb sein muss, sondern beispielsweise ebenfalls in Abhängigkeit von der gemessenen Wassertemperatur ausgeschaltet werden kann. Vorzugsweise enthält der Teichfilter daher einen mit der Steuerung 16 verbundenen Temperaturfühler.

Zur Vereinfachung der Montage des Teichfilters und um den zur Verfügung stehenden Bauraum optimal zu nutzen können Schlammpumpe 17, Entkeimungslampe 14 und Steuerung 16 aneinander über Steckverbindungen festgelegt sein. Bei der dargestellten Ausführungsform dient das UVC-Gerät 14, das in diesem Fall bereits einen 12 Volt-Trafo enthalten kann, als Stromversorger für die Steuerung 16 und die Schlammpumpe 17. Bei dieser Bauform ist bevorzugt die Steuerung 16 an das UVC-Gerät 14 angesteckt und die Schlammpumpe 17 wiederum an die Steuerung 16 angesteckt.

Der erfindungsgemäße Teichfilter kann mit Nutzervorteil bereits mit einer einfachen Steuerung 16 betrieben werden, die lediglich in regelmäßigen Abständen die Schlammpumpe 17 für einen Abtransport der Schmutzpartikel 11 ein- und wieder ausschaltet. Da der Schmutzanfall stark von der Wassertemperatur abhängig ist, kann die Steuerung 16 bei vorhandenem Temperaturfühler die Schlammpumpe 17 auch in unregelmäßigen Abständen betätigen, wie es der Schmutzanfall erfordert. Die dargestellte Ausführungsform weist jedoch eine noch komfortablere Steuerung 16 auf, die eine individuelle Anpassung ermöglicht. So kann die Steuerungsautomatik falls gewünscht auch manuell ausgesetzt oder verändert werden.

In Fig. 6 ist vergrößert, jedoch schematisch, das Bedien- und Anzeigefeld 4 der Steuerung 16 abgebildet. Dieses hat drei Tasten, "Pump", "Intervall" und "UVC".

Über der Taste "Pump" befindet sich eine Zwei-Farb-LED (vorzugsweise grün/rot) und über der Taste "UVC" befindet sich eine blaue LED. Leuchtet die LED über der Taste "Pump" grün, so zeigt sie damit den Betrieb der Schlammpumpe 17 an. Leuchtet diese LED jedoch rot, liegt eine Blockade der Schlammpumpe 17 vor. Bei leuchtender (blauer) LED über der Taste "UVC" ist die Entkeimungslampe 14 in Betrieb.

Die im Teichfilter integrierte Schlammpumpe 17 kann manuell über einen Druck auf den Schalter "Pump" betätigt werden. Bei längerem Druck, z.B. länger als 8 Sekunden, bleibt die Schlammpumpe 17 auch nach Loslassen der Taste eingeschaltet, bis der Filter vollständig leer gepumpt ist. Dazu wird gleichzeitig über eine entsprechende Schaltung oder manuell die Zufuhr weiteren Wassers über die Wasserzuführöffnung 5 unterbunden. Auch empfiehlt es sich, die Steuerung 16 mit einem Energieaufnahmemesser für die Schlammpumpe 17 zu verbinden, über den erfaßt werden kann, wenn die Pumpe 17 leer läuft, um dann die Pumpe 17 abzuschalten. In der Steuerung 16 kann bevorzugt jedoch auch eine maximale Betriebszeit der Schlammpumpe 17, beispielsweise für 240 Sekunden, hinterlegt sein, wonach die Pumpe 17 automatisch ausschaltet. Wurde die Schlammpumpe 17 manuell gestartet, kann sie durch erneuten Druck auf die Taste "Pump" wieder gestoppt werden.

Über die Taste "Intervall" kann die Häufigkeit eines automatischen Schlammabpumpvorgangs eingestellt werden. Vorzugsweise sind in der Steuerung 16 Standardprogramme hinterlegt. Normalerweise sollte bei Auslieferungszustand des Teichfilters ein mittleres Pumpintervall voreingestellt sein. Fällt unter den konkreten Einsatzbedingungen des Teichfilters mehr Schlamm an, so kann das Intervall hoch gesetzt werden. Auch ein Herabsetzen bei geringerem Schlammanfall ist möglich. Durch einzelnes Drücken der Taste "Intervall" werden die Intervalle geändert.

Über die Taste "UVC" kann zusätzlich zu der darüber befindlichen LED auf der oben im Bedien- und Anzeigefeld 4 angeordneten Anzeige 24 der aktuelle Betriebszustand des UVC-Gerätes 14 angezeigt werden. Bei dauerhaft eingeschaltetem UVC-Gerät 14 sollte dort "on" erscheinen, während bei dauerhaft abgeschaltetem UVC-Gerät "off' erscheint. Ein Aufleuchten der Bezeichnung "auto" bedeutet, dass das UVC-Gerät 14 (vorzugsweise temperaturabhängig) unterschiedlich lang automatisch ein- und ausschaltet. Bei wiederholtem Drücken der Taste "UVC" werden die Betriebszustände geändert. Nach Loslassen der Taste wird zunächst für eine vorgegebene Zeit, z.B. 3 Sekunden, der gewählte Betriebszustand angezeigt. Danach erscheinen auf der Anzeige 24 für eine ebenfalls vorgegebene Zeitdauer, z.B. 4 Sekunden, die Betriebsstunden der Entkeimungslampe 14 (Anzeige x 100 = Betriebsstunden). Anschließend wird auf der Anzeige 24 wieder dauerhaft die aktuell gemessene Temperatur des Wassers angegeben, hier 24°.

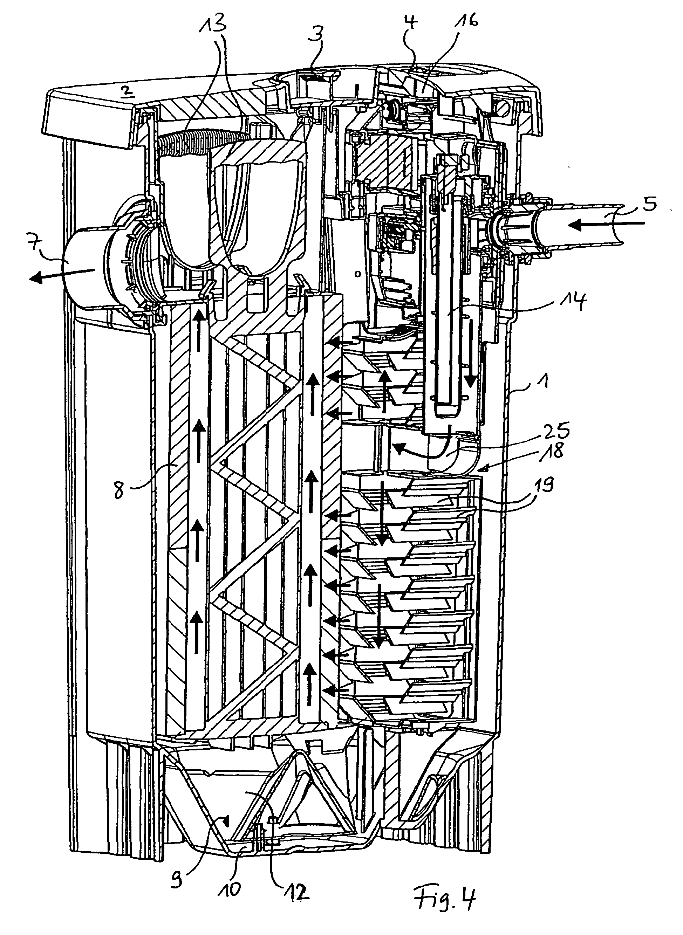

Die Gesamtfunktion des Teichfilters ist am besten in den Fig. 3 und 4 zu erkennen. In Fig. 4 ist der Wasserverlauf mit Pfeilen angedeutet, während in Fig. 3 der Schlammverlauf bei Betätigung der Schlammpumpe 17 über Pfeile symbolisiert ist. In Fig. 4 erkennbar gelangt das Wasser zunächst über die Wasserzufuhröffnung 5, die im hier vorliegenden Fall an eine nicht dargestellte externe Filterpumpe angeschlossen ist, zunächst in das UVC-Gerät 14. Das Wasser verlässt das UVC-Gerät 14 bei der hier dargestellten Ausführungsform untenseitig und gelangt in einen Wasserverteiler 18, der später näher erläutert wird. Im Inneren des Wasserverteilers 18, der bevorzugt eine im wesentlichen vertikale Erstreckung mit einem vertikalen Strömungskanal aufweist, strömt das Wasser nach oben und unten und verlässt den Wasserverteiler 18, von Leitelementen 19 abgelenkt, wieder nach oben gerichtet oder waagerecht. So dringt es in die Filterschwämme 8 ein, die im wesentlichen nach oben durchströmt werden, und verlässt den Teichfilter anschließend durch die Wasserabfuhröffnung 7 wieder in Richtung Teich.

Bei Betätigung der Schlammpumpe 17 werden wie in Fig. 3 gezeigt die Schmutzpartikel 11, die sich im Schlammsumpf 10 abgesetzt haben, durch einen Schlammabsaugkanal 20 mit einem Absaugrohr 21 zur Schlammpumpe 17 von deren Motor 22 angesaugt und über die Schlammabfuhröffnung 6 aus dem Teichfilter herausgeführt.

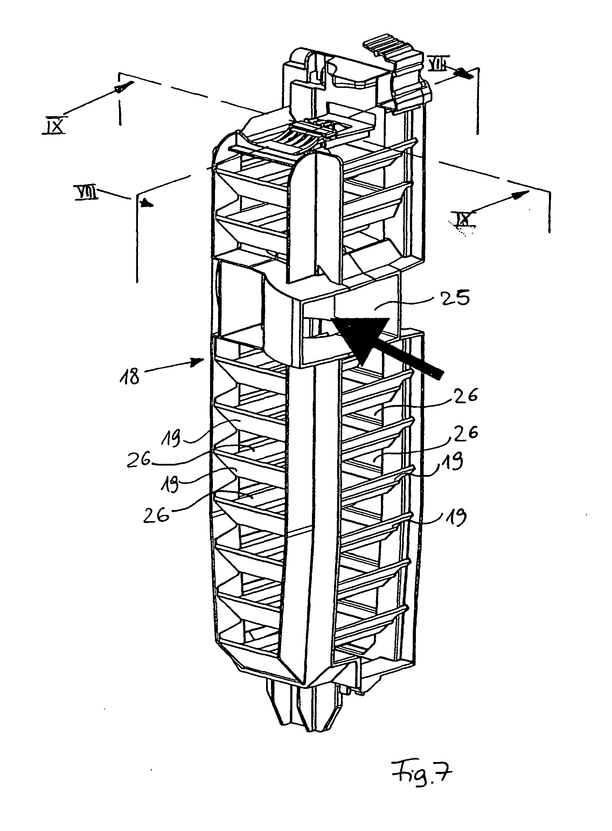

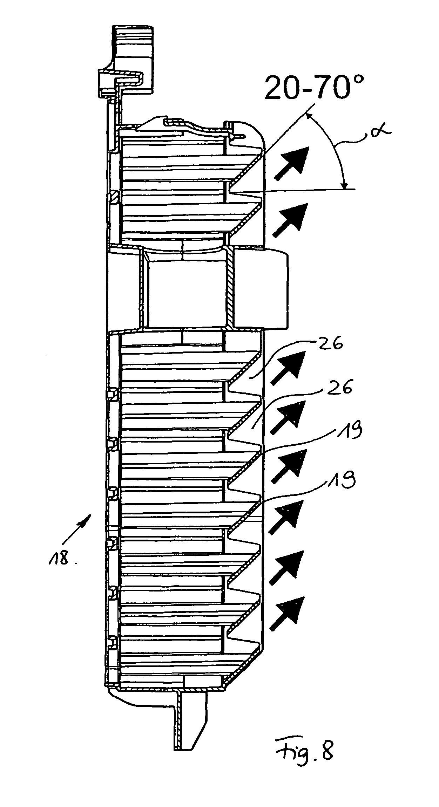

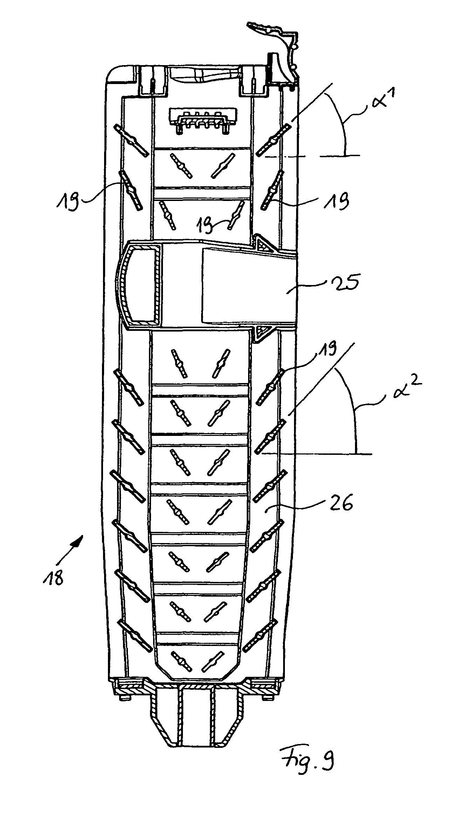

Der im erfindungsgemäßen Teichfilter mit großem Vorteil eingesetzte Wasserverteiler 18 hat im wesentlichen zwei Eigenschaften. Zunächst dient er der Wasserverteilung bzw. -beruhigung, indem er dem einströmenden Wasser durch Brechung Energie entzieht. Das Wasser strömt durch die in Fig. 7 mit einem Pfeil gekennzeichnete Wasserzuleitung 25, die bevorzugt in der oberen Hälfte des Wasserverteilers 18 angeordnet ist, in das Innere des Wasserverteilers 18 und wird dort durch die vorzugsweise als Lamellen 19 ausgebildeten Leitelemente umgelenkt und dabei beruhigt. So verlässt das Wasser den Wasserverteiler 18 wieder durch zwischen den Lamellen 19 angeordnete Ausströmöffnungen 26 und tritt ruhig und ohne Turbulenzen in den Filterraum, in dem das Filtermedium 8 angeordnet ist. Dadurch wird dort die Sedimentation von Schmutzpartikeln begünstigt. Der Wasserverteiler ist hier vorzugsweise als Lamellenabscheider ausgebildet mit seine äußere Geometrie bildenden Lamellen als Leitelemente 19 und einem inneren, vorzugsweise im wesentlichen vertikalen Strömungskanal. Die Leitelemente 19 des Wasserverteilers 18 sind bei der dargestellten Ausführungsform so angeordnet, dass die Abströmung schräg nach oben gerichtet erfolgt. Vorzugsweise sind sie unter einem Anstellwinkel a von 20° bis 70° nach außen oben gerichtet angeordnet, so dass das ausströmende Wasser wie in Fig. 8 durch Pfeile veranschaulicht ist, zur Filteroberseite abströmt. Dadurch wird die Schlammabsetzzone im Filterbodenbereich mit dem Sammelraum 9 und dem Schlammsumpf 10 vor Strömungen geschützt, die ein Aufwirbeln der Schmutzpartikel 11 zur Folge hätten. Wie Fig. 9 zeigt, können die Leitelemente 19 auch im Höhenverlauf des Wasserverteilers 18 in unterschiedlichen Anstellwinkeln a angeordnet sein, um die gerichtete Wasserabgabe in den Filterraum gezielt zu beeinflussen. Ferner ist in Fig. 7 erkennbar, dass die Leitelemente 19 benachbarter Wandungsbereiche des Wasserverteilers 18 bevorzugt zueinander versetzt angeordnet sein können, so dass die Leitelemente 19 des einen Wandungsbereichs jeweils auf Höhe der Ausströmöffnungen 26 des benachbarten Wandungsbereichs liegen. Auch dadurch wird eine Vergleichmäßigung der austretenden Wasserströmung erreicht, und Stauungen werden vermieden. Da der natürliche Strömungsverlauf ein Absinken des Wassers begünstigt, empfiehlt es sich wie bei dem dargestellten Wasserverteiler 18, die Wasserzuleitung 25 in dessen oberer Hälfte, bevorzugt im oberen Drittel bzw. wie dargestellt in der Aufteilung von ¼ zu ¾ der Wasserverteilerhöhe anzuordnen.

Die weitere wesentliche Funktion des Wasserverteilers 18 ist die eines Partikelabscheiders. Beim Auftreffen der Wasserströmung auf die Leitelemente 19 treten einzelne kleine Schlammflocken miteinander in Kontakt und verbinden sich zu größeren Flocken. Da die Absetzgeschwindigkeit von größeren Flocken höher ist, wird bereits am Wasserverteiler 18 bzw. Partikelabscheider insoweit Schlamm durch Sedimentation abgeschieden, der an den geneigten Leitelementen 19 nach unten gleitet und absinkt. Daher ist bevorzugt auch der Partikelabscheider 18 oberhalb des Sammelraums 9 angeordnet. Wie in Fig. 2 zu sehen ist, kann der Absetzkegel 12 im Sammelraum 9 zusätzlich zu der Kegelgrundform sternförmig angeordnete Rippen aufweisen, die eine gleichmäßige Füllung des Schlammsumpfes begünstigen können, unabhängig davon, ob die Schmutzpartikel aus dem Partikelabscheider 18 oder dem Filtermedium 8 herabsinken. Insgesamt entlastet der Partikelabscheider 18 die Filterschäume 8 in ihrer mechanischen Wirkung, die somit länger durchgängig bleiben.

Der erfindungsgemäße Teichfilter zeichnet sich durch einen hohen Bedienkomfort, lange Wartungsintervalle und eine besondere Langlebigkeit der innen liegenden Filtermedien 8 aus. Bevorzugt kommt der erfindungsgemäße Teichfilter in einem Gesamtsystem zur Teichreinigung zum Einsatz. Dieses umfasst den erfindungsgemä-βen Teichfilter und eine Wasserpumpe und kann insbesondere bei Teichen mit einem erhöhten Schmutzeintrag von oben, beispielsweise durch Laub, durch einen Oberflächenabsauger (Skimmer) ergänzt werden. Außerdem kann im Gesamtsystem zusätzlich zur Klimaverbesserung im Teich ein Belüftungsgerät eingesetzt werden.

## Patentansprüche

1. Teichfilter mit einem Filtermedium (8), das in einem Gehäuse (1) mit einer Wasserzufuhröffnung (5), einer Wasserabfuhröffnung (7) und einer Schlammabführöffnung (6) aufgenommen ist, wobei unterhalb des Filtermediums (8) ein Sammelraum (9) für Schmutzpartikel (11) ausgebildet ist, **gekennzeichnet durch** eine Schlammpumpe (17) zur Abfuhr der Schmutzpartikel (11) und eine Steuerung (16) der Schlammpumpe (17).

2. Teichfilter nach Anspruch 1, **dadurch gekennzeichnet, dass** die Schlammpumpe (17) innerhalb des Gehäuses (1) angeordnet ist.

3. Teichfilter nach einem der vorhergehenden Ansprüche, **dadurch gekennzeichnet, dass** die Schlammabfuhröffnung (6) oberhalb des Sammelraums (9) liegt.

4. Teichfilter nach einem der vorhergehenden Ansprüche, **dadurch gekennzeichnet, dass** eine Entkeimungslampe (14) im Gehäuse (1) integriert ist.

5. Teichfilter nach Anspruch 4, **dadurch gekennzeichnet, dass** die Steuerung (16) mit der Entkeimungslampe (14) verbunden ist.

6. Teichfilter nach Anspruch 5, **dadurch gekennzeichnet, dass** die Steuerung (16) ebenfalls zur Schaltung der Entkeimungslampe (14) ausgelegt ist.

7. Teichfilter nach Anspruch 5 oder 6, **dadurch gekennzeichnet, dass** die Steuerung (16) an der Entkeimungslampe (14) mit einer Steckverbindung festgelegt ist.

8. Teichfilter nach einem der vorhergehenden Ansprüche, **dadurch gekennzeichnet, dass** die Schlammpumpe (17) an der Steuerung (16) mit einer Steckverbindung festgelegt ist.

9. Teichfilter nach einem der vorhergehenden Ansprüche, **gekennzeichnet durch** einen Temperaturfühler, der mit der Steuerung (16) verbunden ist.

10. Teichfilter nach einem der vorhergehenden Ansprüche, **gekennzeichnet durch** eine gemeinsame Energieversorgung für Schlammpumpe (17) und Steuerung (16) und/oder ggf. Entkeimungslampe (14).

11. Teichfilter nach einem der vorhergehenden Ansprüche, **dadurch gekennzeichnet, dass** die Steuerung (16) gespeicherte Standardprogramme beinhaltet.

12. Teichfilter nach einem der vorhergehenden Ansprüche, **gekennzeichnet durch** eine Steuerungsautomatik, die manuell aussetzbar ist.

13. Teichfilter nach einem der vorhergehenden Ansprüche, **dadurch gekennzeichnet, dass** die Steuerung (16) eine Filterentleerfunktion, vorzugsweise mit Endabschaltung der Schlammpumpe (17) aufweist.

14. Teichfilter nach einem der vorhergehenden Ansprüche, **gekennzeichnet durch** einen Energieaufnahmemesser für die Schlammpumpe (17).

15. Teichfilter nach Anspruch 11, **dadurch gekennzeichnet, dass** der Energieaufnahmemesser mit der Steuerung (16) verbunden oder Teil dieser ist und die Schlammpumpe (17) im Leerlauf abschaltet.

16. Teichfilter nach einem der vorhergehenden Ansprüche, **gekennzeichnet durch** einen Absetzkegel (12) im Sammelraum (9).

17. Teichfilter nach einem der vorhergehenden Ansprüche, **dadurch gekennzeichnet, dass** im Gehäuse (1) ein Wasserverteiler (18) mit Leitelementen (19) aufgenommen ist.

18. Teichfilter nach Anspruch 17, **dadurch gekennzeichnet, dass** der Wasserverteiler (18) auch ein Partikelabscheider ist.

## Claims

1. Pond filter having a filter medium (8) which is held in a housing (1) having a water infeed opening (5), a water outfeed opening (7) and a sludge outfeed opening (6), a collecting space (9) for dirt particles (11) being formed below the filter medium (8), **characterised by** a sludge pump (17) to feed out the dirt particles (11) and a control unit (16) for controlling the sludge pump (17).

2. Pond filter according to claim 1, **characterised in that** the sludge pump (17) is arranged inside the housing (1).

3. Pond filter according to either of the preceding claims, **characterised in that** the sludge outfeed opening (6) is situated above the collecting space (9).

4. Pond filter according to one of the preceding claims, **characterised in that** a disinfection lamp (14) is incorporated in the housing (1).

5. Pond filter according to claim 4, **characterised in that** the control unit (16) is connected to the disinfection lamp (14).

6. Pond filter according to claim 5, **characterised in that** the control unit (16) is also designed for the switching of the disinfection lamp (14).

7. Pond filter according to claim 5 or 6, **characterised in that** the control unit (16) is fixed to the disinfection lamp (14) by a plug-in connection.

8. Pond filter according to one of the preceding claims, **characterised in that** the sludge pump (17) is fixed to the control unit (16) by a plug-in connection.

9. Pond filter according to one of the preceding claims, **characterised by** a temperature sensor which is connected to the control unit (16).

10. Pond filter according to one of the preceding claims, **characterised by** a common power supply for the sludge pump (17) and the control unit (16) and/or, where applicable, the disinfection lamp (14).

11. Pond filter according to one of the preceding claims, **characterised in that** the control unit (16) contains stored standard programs.

12. Pond filter according to one of the preceding claims, **characterised by** an automatic control process which can be put out of operation manually.

13. Pond filter according to one of the preceding claims, **characterised in that** the control unit (16) has a filter emptying function, preferably including a facility for final switch-off of the sludge pump (17).

14. Pond filter according to one of the preceding claims, **characterised by** a power consumption meter for the sludge pump (17).

15. Pond filter according to claim 11, **characterised in that** the power consumption meter is connected to the control unit (16) or is part thereof and switches off the sludge pump (17) if the latter is running off-load.

16. Pond filter according to one of the preceding claims, **characterised by** a settlement cone (12) in the collecting space (9).

17. Pond filter according to one of the preceding claims, **characterised in that** a water distributor (18) having baffles (19) is held in the housing (1).

18. Pond filter according to claim 17, **characterised in that** the water distributor (18) is also a separator-out of particles.

## Revendications

1. Filtre pour bassin avec un matériau filtrant (8) qui est reçu dans un boîtier (1) présentant une ouverture d'amenée d'eau (5), une ouverture d'évacuation d'eau (7) et une ouverture d'évacuation de boue (6), sachant qu'un espace collecteur (9) pour des particules sales (11) est réalisé au-dessous du matériau filtrant (8), **caractérisé par** une pompe à boue (17) pour l'évacuation des particules sales (11) et une commande (16) de la pompe à boue (17).

2. Filtre pour bassin selon la revendication 1, **caractérisé en ce que** la pompe à boue (17) est disposée dans le boîtier (1).

3. Filtre pour bassin selon l'une quelconque des revendications précédentes, **caractérisé en ce que** l'ouverture d'évacuation de boue (6) se trouve au-dessus de l'espace collecteur (9).

4. Filtre pour bassin selon l'une quelconque des revendications précédentes, **caractérisé en ce qu'**une lampe germicide (14) est intégrée dans le boîtier (1).

5. Filtre pour bassin selon la revendication 4, **caractérisé en ce que** la commande (16) est reliée à la lampe germicide (14).

6. Filtre pour bassin selon la revendication 5, **caractérisé en ce que** la commande (16) est aussi configurée pour commuter la lampe germicide (14).

7. Filtre pour bassin selon la revendication 5 ou 6, **caractérisé en ce que** la commande (16) est fixée sur la lampe germicide (14) à l'aide d'un assemblage à emboîtement.

8. Filtre pour bassin selon l'une quelconque des revendications précédentes, **caractérisé en ce que** la pompe à boue (17) est fixée sur la commande (16) à l'aide d'un assemblage à emboîtement.

9. Filtre pour bassin selon l'une quelconque des revendications précédentes, **caractérisé par** un capteur de température relié à la commande (16).

10. Filtre pour bassin selon l'une quelconque des revendications précédentes, **caractérisé par** une alimentation en énergie commune pour la pompe à boue (17) et la commande (16) et/ou éventuellement la lampe germicide (14).

11. Filtre pour bassin selon l'une quelconque des revendications précédentes, **caractérisé en ce que** la commande (16) contient des programmes standard enregistrés.

12. Filtre pour bassin selon l'une quelconque des revendications précédentes, **caractérisé par** un mécanisme automatique de commande qui peut être arrêté manuellement.

13. Filtre pour bassin selon l'une quelconque des revendications précédentes, **caractérisé en ce que** la commande (16) présente une fonction de vidage de filtre, de préférence avec arrêt final de la pompe à boue (17).

14. Filtre pour bassin selon l'une quelconque des revendications précédentes, **caractérisé par** un mesureur d'absorption d'énergie pour la pompe à boue (17).

15. Filtre pour bassin selon la revendication 11, **caractérisé en ce que** le mesureur d'absorption d'énergie est relié à la commande (16) ou fait partie de celle-ci et la pompe à boue (17) s'arrête à vide.

16. Filtre pour bassin selon l'une quelconque des revendications précédentes, **caractérisé par** un cône de dépôt (12) dans l'espace collecteur (9).

17. Filtre pour bassin selon l'une quelconque des revendications précédentes, **caractérisé en ce qu'**un distributeur d'eau (18) avec des éléments conducteurs (19) est reçu dans le boîtier (1).

18. Filtre pour bassin selon la revendication 17, **caractérisé en ce que** le distributeur d'eau (18) est aussi un séparateur de particules.
